# EUROPEAN PATENT APPLICATION

(11) **EP 0 802 044 A2**
(43) Date of publication of application: **22.10.1997**
(21) Application number: 97610012.3
(22) Date of filing: 16.04.1997
(51) Int. Cl.: B32B 7/06, B65D 65/40

(54) **Method for the manufacture of a self-adhesive recloseable packing laminate**

(30) Priority: 16.04.1996 DK 437/96
(71) Applicant: Danapak A/S, 2840 Holte (DK)
(72) Inventor: Friis, Jorgen, 5690 Tommerup (DK)
(74) Representative: Larsen, Hans Ole

(57) **Abstract**

A packaging laminate (4) according to the invention comprises a base polymeric foil (1) on which in the desired places there is applied an adhesive layer (2), which in turn is covered by a weld layer (3).

The laminate (4) will hereby be able to function in a self-sealing, re-openable and re-closable manner, in that a separation occurs between the adhesive layer (2) and the weld layer (3).

In this way there is achieved a surprisingly simple and effective re-closure, either by the adhesion of the adhesive layers to each other (fig. 1) or by the adhesion of the adhesive layer with other materials (5) (fig. 2).

## Description

### Background of the invention

The invention concerns a method for the manufacture of a self-sealing, re-closable packaging laminate comprising a base polymeric foil, also a laminate manufactured hereby and its use.

In all cases where there is need for a packaging which requires to be capable of being re-closed/re-opened many times, some form of closure must be involved. This can be a physical fastening together, for example by a zip fastener, or an adhesion between the two co-operating foil parts.

A zip fastener is difficult to apply, the reason being that this cannot form part of the normal production flow, which means that it must be applied by subsequent welding, one part to each piece of the foil.

A self-sealing closure, such as that known e.g. from GB 2,023,539 A, comprises the application of a self-adhesive on the two parts which are to be closed, said self-adhesive being quick-drying in order not to stick when touched.

However, this closure is not particularly reliable, the reason being that the adhesive does not have particularly good adhesion characteristics, in that its adherence capabilities can be weakened by being touched or other defiling influences.

### The object of the invention

It is the object of the invention to overcome these shortcomings and disadvantages, and this is achieved by a method for the manufacture of a self-sealing, re-closable packaging laminate, whereby the foil is first given a layer of adhesive (self-sealing), after which it is given a weld layer for the formation of the re-closable laminate.

In a surprisingly simple manner, there is hereby achieved a particularly efficient closure with good and long-lasting functional characteristics, which is not affected by use to any noteworthy degree since only the one surface is adhesive.

This is due to the choice of weld layer, which upon the first separation will have greater abilities of adherence with the second layer with which it is joined. Upon separation, the laminate will be changed either to lack the lacquer layer or to have a "double" lacquer layer.

By means of the packaging laminate disclosed in claim 2, it is easy to effect the closure at the desired place on the foil, and it can be applied during the on-going production.

Finally, as disclosed in claim 3, it is expedient to use the laminate for packaging purposes, either as a self-closing bag, pouch or the like.

### The drawing

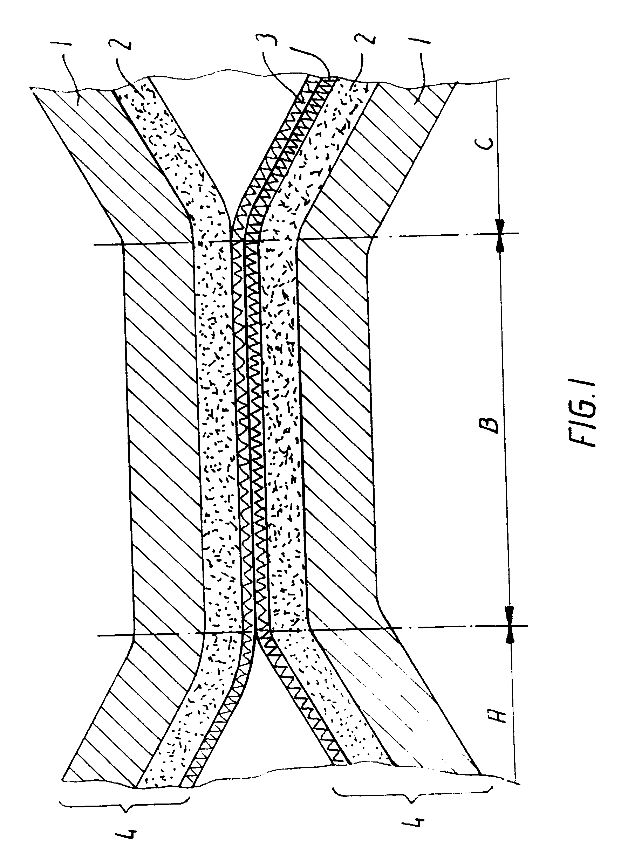

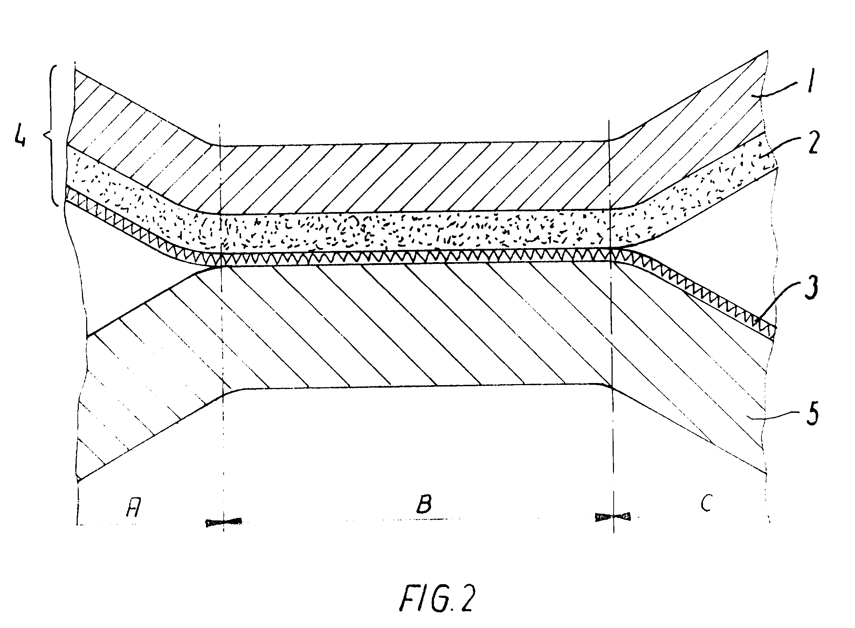

In the following, the invention will be described in more detail with reference to the drawing, where fig. 1 shows an example of the laminate and fig. 2 shows a second example.

### Description of the example embodiments

In fig. 1 is shown a section through a packaging laminate 4 which is laid together with a corresponding laminate 4 with inner side against inner side.

The laminate 4 comprises a base polymeric foil 1 of any suitable kind.

On this base foil 1, at the place or places which are desired to effect the re-closing function, there is applied an adhesive of any suitable kind in a layer 2.

Finally, the adhesive layer 2 is covered by a weld layer 3 which, for example, can be a weld lacquer.

The drawing is divided into three positions, i.e. position A which shows the laminate 4 as manufactured.

Position B shows the laminate 4 when it is stuck together, i.e. when the packaging is in the closed state.

Finally, where position C is concerned, the laminate layer 4 is shown separated, whereby a surprising effect is achieved, i.e. that the two weld layers 3 will have greater mutual abilites of sticking together, so that the one weld layer 3, the upper layer in the drawing, will release and expose the adhesive layer 2.

There is hereby achieved good powers of adhesion between the adhesive layer 2 and the "double" weld layer 3, which will function when the packaging is repeatedly re-closed.

In fig. 2 is shown an example of a second embodiment of the laminate, where the one laminate 4 is as described above, while the second layer 5 consists of a base material, which can be a foil or a semi-stiff material such as a packaging tray or the like, where the edge part constitutes this layer 5.

Position A shows the one laminate 4 above, while the second layer 5 below consists solely og a foil.

In position B it is seen how the layers 4 and 5 are stuck together when the packaging is closed.

Finally, in position C it is seen how upon separation the weld layer 3 is released from its adherence with the adhesive layer 2 and adheres to the base material 5. There is hereby achieved the desired re-closure, in that the adhesive layer 2 will stick to the weld layer 3 when the packaging is re-closed.

The laminate can thus be used for the manufacture of packaging bags, packaging trays, packaging pouches and the like, which are required to be able to be repeatedly open and closed.

Since the laminate 4 can be manufactured in known plants and provided with adhesive layer 2 and weld layer 3 using commonly-known techniques, the laminate can be produced in a rational manner and in any desired dimension.

## Claims

1. Method for the manufacture of a self-sealing, re-closable packaging laminate comprising a base polymeric foil, **characterized** in that the foil (1) is first provided with an adhesive layer (2) (self-sealing), after which there is applied a weld layer (3) for the formation of the re-closable laminate (4).

2. Packaging laminate manufactured by the method according to claim 1, **characterized** in in that it comprises a base polymeric foil (1) on which there is applied an adhesive layer (2) in the places where the foil is required to be self-sealing and re-closable, and which is covered by a weld layer (3).

3. Use of the packaging laminate disclosed in claim 2, **characterized** in that it is used for the manufacture of packaging which shall be capable of being repeatedly opened and closed.
